# EUROPEAN PATENT SPECIFICATION

(11) **EP 3 470 763 B1**
(45) Date of publication and mention of the grant of the patent: **24.02.2021**
(21) Application number: 18803520.8
(22) Date of filing: 03.07.2018
(51) Int. Cl.: F28F 9/22, B60K 11/04, F01P 11/10, F28F 9/02

(54) **HEAT EXCHANGER**
WÄRMETAUSCHER
ÉCHANGEUR DE CHALEUR

(43) Date of publication of application: 17.04.2019
(73) Proprietor: Komatsu Ltd., Minato-ku Tokyo 107-8414 (JP)
(72) Inventor: IIJIMA Shunsuke, Tokyo 107-8414 (JP); TASHIRO Takayuki, Tokyo 107-8414 (JP); WATANABE Hiroyuki, Tokyo 107-8414 (JP)
(74) Representative: Grünecker Patent- und Rechtsanwälte PartG mbB
(86) International application number: PCT/JP2018/025195
(87) International publication number: WO 2018/221751

(56) References cited:
- CN-A- 103 063 076
- CN-A- 103 063 076
- JP-A- 2007 046 890
- JP-A- 2008 151 415
- JP-A- 2008 151 415
- JP-A- 2010 209 878
- JP-A- 2010 209 878
- JP-U- S5 918 101
- KR-A- 20080 107 024
- US-A- 5 625 112
- US-A1- 2010 300 647

## Description

### Technical Field

The present invention relates to a heat exchanger according to the preamble of claim 1.

### Background Art

Such a heat exchanger is known from JP 2008 151415 A, which is deemed to represent the closest prior art. Specifically, this heat exchanger has a heat exchange part receiving the fluid from an inflow side end and carrying out heat exchange of the fluid, a fluid introducing passage provided along the inflow side end and introducing the fluid to the heat exchange part, and at least one reflection member provided in the fluid introducing passage and reflecting fluid flowing in a direction along the inflow side end in the fluid introducing passage toward a direction heading toward the inflow side end. The reflecting member is formed by a plurality of guides provided in the fluid introducing passage.

US 5 625 112 A shows different configurations of flow distributors that receive a perpendicular flow of fluid from a radially oriented heat exchanger inlet nozzle. This radial inlet nozzle supplies a mixture of liquid and gas to a plurality of heat exchange tubes via an inlet chamber. The flow distributor uses a turning vane type distributor to equalize the total liquid distribution and the proportion of liquid to vapor in the fluid supply to inlets of tubes. The turning vane distributor consists of a series of curved vanes that define flow channels between the adjacent vanes.

JP 2010 209878 A provides a EGR cooler which includes a tubular inlet header whose one end is attached to a gas flow upstream side of a core part comprising a plurality of plate tubes for exchanging heat between exhaust gas flowing inside the plate tubes and cooling water flowing around the plate tubes. A straightening vane is installed inside the inlet header for partitioning a passage along the flow of the exhaust gas and leveling the flow rate of the exhaust gas on both sides thereof.

CN 103 063 076 A proposes a heat exchanger, wherein a refrigerant inlet is arranged on a flow collection pipe and a flow guide device is arranged in the flow collection pipe downstream of and near the refrigerant inlet. By means of the flow guide device, such as a flow guide plate, flow direction and flow field distribution of fluid at the position of the refrigerant inlet are changed to enable the refrigerant to evenly enter various heat exchange pipes, such as flat pipes, and thereby improve heat exchange performance of the heat exchanger.

JP 2014 173296 A discloses a heat exchanger which is provided in a power chamber of a construction machine and is cooled by cooling air generated by a fan. In general, a heat exchanger includes an upstream-side tank portion into which a high-temperature fluid (for example, air compressed by a turbocharger) flows and a plurality of heat exchange tubes which are cooled by causing the high-temperature fluid which has flowed into the upstream-side tank portion to flow through the plurality of heat exchange tubes.

### Summary of Invention

### Technical Problem

However, in a heat exchanger, a high-temperature fluid which has flowed into an upstream-side tank portion may flow into only some heat exchange tubes. In this case, temperature variation occurs between the plurality of heat exchange tubes, and thus, a thermal expansion difference occurs between the plurality of heat exchange tubes. As a result, for example, in the heat exchanger, high stresses exceeding a limit of mechanical strength of a material occur. That is, there is a problem that durability of the heat exchanger decreases.

The present invention is made in consideration of the above-described problem, and an object thereof is to provide a heat exchanger capable of improving durability.

### Solution to Problem

The above object is solved according to the present invention as defined in claim 1 by providing a heat exchanger, comprising: an upstream-side tank portion which includes an upstream-side space extending in a first direction and an inflow port, the inflow port being formed on a first end portion of the upstream-side tank portion in the first direction and a cooling target fluid flowing from an outside toward the upstream-side space through the inflow port in the first direction; a core portion which includes a plurality of heat exchange tubes which are connected to a first side portion of the upstream-side tank portion in a second direction orthogonal to the first direction and are arranged in the first direction, the fluid flowing from the upstream-side space into the plurality of heat exchange tubes; and a guide member which is disposed in the upstream-side space, the guide member including a guide surface which faces the inflow port in the first direction and includes a first inclined surface inclined to extend in the second direction toward the first side portion as the first inclined surface goes away from the inflow port in the first direction, wherein the first end portion includes a first inner surface which is formed to extend in the second direction and to which the inflow port is opened, wherein the first inner surface includes a tube-side region which is positioned between the inflow port and the first side portion, wherein the guide surface includes a second inclined surface which is continuously formed from a first end of the first inclined surface positioned on the first side portion side and faces the tube-side region in the first direction, the second inclined surface being inclined to extend in the first direction toward the tube-side region as the second inclined surface goes in the second direction from the first inclined surface, and wherein the second inclined surface is formed in a concave shape in which an inclination angle between the second inclined surface and the first direction decreases as the second inclined surface goes toward the first side portion in the second direction..

### Advantageous Effects of Invention

According to the present invention, it is possible to improve durability of a heat exchanger.

### Brief Description of Drawings

FIG. 1 is a side view showing a dump truck including a heat exchanger according to an embodiment of the present invention.
FIG. 2 is a plan view schematically showing an engine room of the dump truck including the heat exchanger according to the embodiment of the present invention.
FIG. 3 is a perspective view showing an aftercooler including the heat exchanger according to the embodiment of the present invention.
FIG. 4 is a sectional view showing the heat exchanger according to the embodiment of the present invention.
FIG. 5 is an enlarged sectional view showing a main portion of the heat exchanger of FIG. 4.
FIG. 6 is a sectional view taken along line VI-VI of FIG. 5.
FIG. 7 is an enlarged sectional view showing a guide member and a periphery thereof in the heat exchanger of FIGS. 4 and 5.
FIG. 8 is a sectional view showing a main portion of a heat exchanger according to another embodiment not forming part of the present invention.
FIG. 9 is a sectional view showing a main portion of a heat exchanger according to still another embodiment not forming part of the present invention.
FIG. 10 is a sectional view showing a main portion of a heat exchanger according to still another embodiment not forming part of the present invention.

### Description of Embodiments

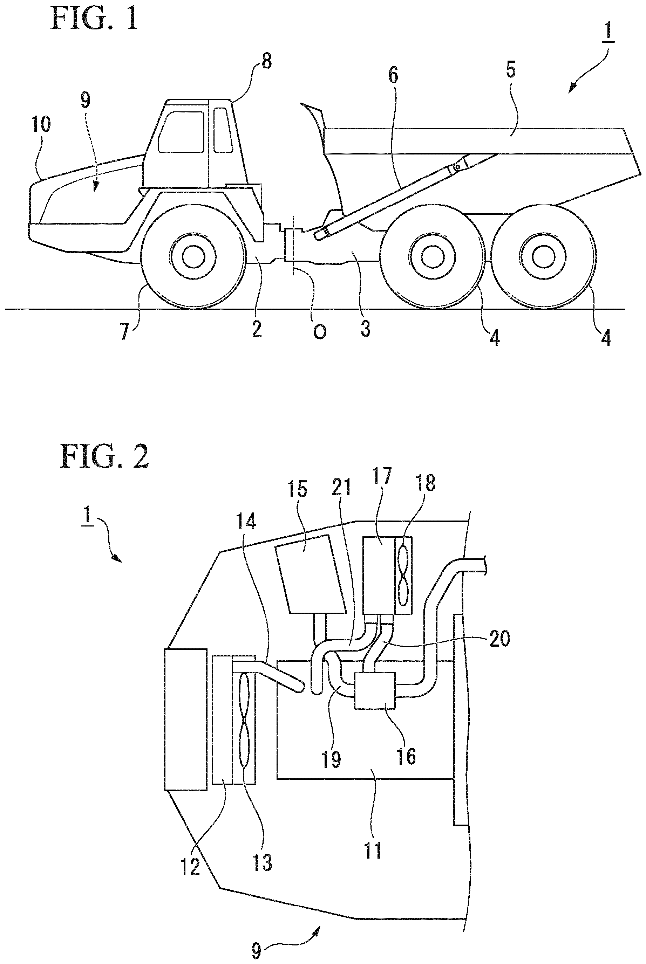

Hereinafter, an embodiment of the present invention will be described in detail with reference to FIGS. 1 to 7. A heat exchanger according to the present embodiment is provided in a dump truck 1 which is a work vehicle exemplified in FIGS. 1 and 2. First, the dump truck 1 will be described.

### <Dump Truck>

As shown in FIG. 1, the dump truck 1 is an articulated dump truck in which a front frame 2 and a rear frame 3 are oscillatingly connected to each other about an axis O. The rear frame 3 is provided with rear wheels 4 and a vessel 5. The vessel 5 is provided so as to be freely lifted and lowered with respect to the rear frame 3. The vessel 5 is lifted and lowered by extending and contracting a host cylinder 6 which is a hydraulic actuator.

The front frame 2 includes a front wheel 7, a cap 8, and an engine room 9. The engine room 9 is disposed in front of the cap 8 and is covered with an exterior cover 10.

FIG. 2 is an aspect when the engine room 9 is viewed from above in a state where the exterior cover 10 is opened. That is, FIG. 2 is a plan view schematically showing the engine room of the dump truck 1. An engine 11, a radiator 12, and a cooling fan 13 for the radiator are disposed in the engine room 9.

The radiator 12 is disposed in front of the engine 11. The engine 11 and the radiator 12 are connected to each other via a pipe 14. Accordingly, cooling water for cooling the engine 11 circulates between the engine 11 and the radiator 12.

The cooling fan 13 for the radiator generates cooling air for cooling the above-described cooling water which has passed through the radiator 12. The cooling fan 13 for the radiator generates cooling air which flows from a front side of the dump truck 1 toward a rear side thereof. As shown in FIG. 2, the cooling fan 13 for the radiator may be disposed behind the radiator 12. In addition, for example, the cooling fan 13 for the radiator may be disposed in front of the radiator 12.

In addition, an air cleaner 15, an exhaust turbocharger 16, an aftercooler 17, and a cooling fan 18 for the aftercooler are disposed in the engine room 9.

The exhaust turbocharger 16 compresses outside air, which is sucked into the engine 11, using an exhaust gas discharged from the engine 11. The exhaust turbocharger 16 is attached to the engine 11. The air cleaner 15 is connected to the exhaust turbocharger 16 via a pipe 19.

The aftercooler 17 cools air (a fluid) which has been compressed and has reached a high temperature in the exhaust turbocharger 16. The air cooled by the aftercooler 17 is supplied to the engine 11. The aftercooler 17 is connected to the exhaust turbocharger 16 via a suction pipe 20. In addition, the aftercooler 17 is connected to the engine 11 via a discharge pipe 21.

The cooling fan 18 for the aftercooler generates cooling air which passes through the aftercooler 17 so as to cool the above-described air. The cooling fan 18 for the aftercooler generates cooling air which flows from the front side of the dump truck 1 toward the rear side thereof. As shown in FIG. 2, the cooling fan 18 for the aftercooler may be disposed behind the aftercooler 17. In addition, for example, the cooling fan 18 for the aftercooler may be disposed in front of the aftercooler 17.

### <Aftercooler>

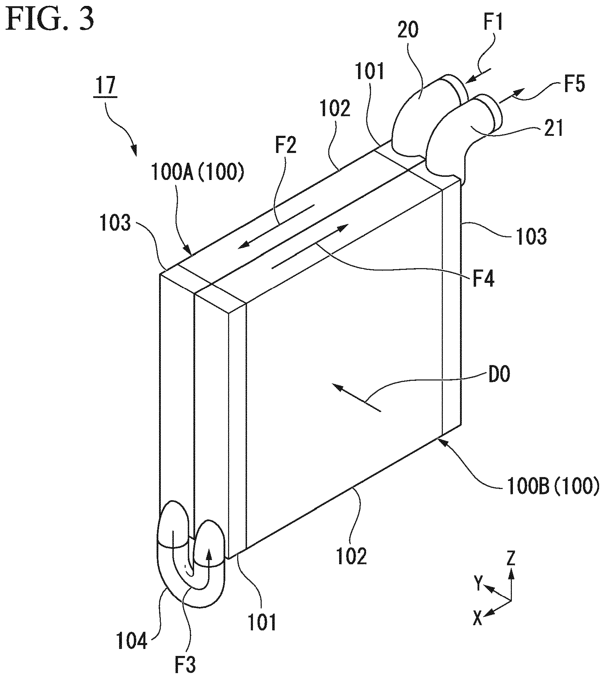

As shown in FIG. 3, the aftercooler 17 includes a heat exchanger 100 (100A, 100B) according to the present embodiment. The number of the heat exchangers 100 may be a predetermined number. However, in the present embodiment, the number of the heat exchangers 100 is two. Each heat exchanger 100 includes an upstream-side tank portion 101 and a core portion 102. In addition, each heat exchanger 100 also includes a downstream-side tank portion 103.

The above-described suction pipe 20 is connected to the upstream-side tank portion 101 of a first heat exchanger 100A. The above-described discharge pipe 21 is connected to the downstream-side tank portion 103 of a second heat exchanger 100B. In addition, the downstream-side tank portion 103 of the first heat exchanger 100A and the upstream-side tank portion 101 of the second heat exchanger 100B are connected to each other via a connection pipe 104. Accordingly, the air (high-temperature air) compressed by the exhaust turbocharger 16 (refer to FIG. 2) flows through the upstream-side tank portion 101, the core portion 102, and the downstream-side tank portion 103 of the first heat exchanger 100A in that order. Thereafter, the air flows through the upstream-side tank portion 101, the core portion 102, and the downstream-side tank portion 103 of the second heat exchanger 100B in that order via the connection pipe 104, and thereafter, is supplied to the engine 11 (refer to FIG. 2). Arrows F1 to F5 shown in FIG. 3 indicate flow paths through which the air (high-temperature air) compressed by the exhaust turbocharger 16 flows from the suction pipe 20 into the upstream-side tank portion 101 of the first heat exchanger 100A and flows from the downstream-side tank portion 103 of the second heat exchanger 100B to the discharge pipe 21. An arrow D0 shown in FIG. 3 indicates a flow direction of the cooling air (air) which hits an outer portion of the aftercooler 17 and passes through the aftercooler 17.

### <Heat Exchanger>

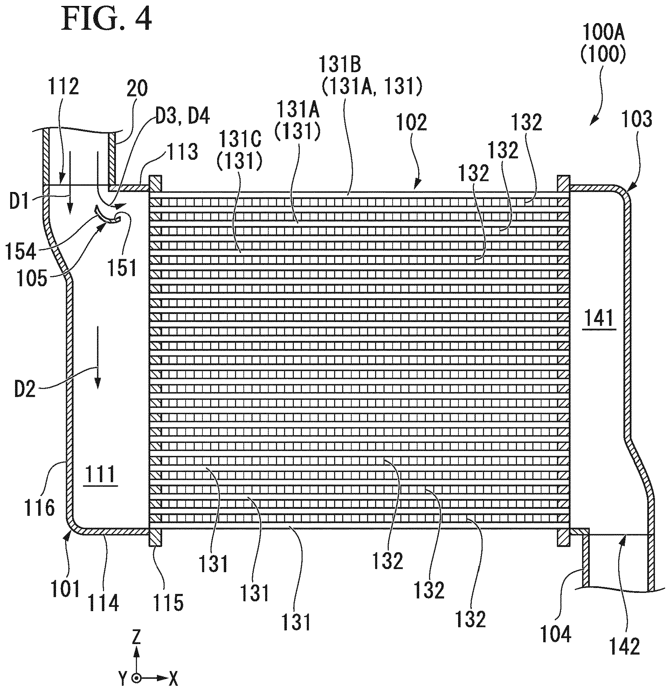

Next, the heat exchanger 100 according to the present embodiment will be described mainly with reference to FIGS. 4 to 7. In FIGS. 4 to 7, a configuration of the first heat exchanger 100A is exemplified. However, a configuration of the second heat exchanger 100B is similar to that of the first heat exchanger 100A.

### <Upstream-side Tank Portion>

As shown in FIGS. 4 to 6, the upstream-side tank portion 101 includes an upstream-side space 111 and an inflow port 112. The upstream-side space 111 extends in a first direction (Z axis direction). The upstream-side tank portion 101 includes a first end portion 113, a second end portion 114, a first side portion 115, a second side portion 116, a third side portion 117, and a fourth side portion 118 which define the upstream-side space 111. The first end portion 113 and the second end portion 114 are arranged at an interval in the first direction and form both ends of the upstream-side space 111 in the first direction. The first side portion 115 and the second side portion 116 are arranged at an interval in a second direction (X axis direction) orthogonal to the first direction and form both ends of the upstream-side space 111 in the second direction. The third side portion 117 and the fourth side portion 118 are arranged at an interval in a third direction (Y axis direction) orthogonal to the first direction and the second direction and form both end portions of the upstream-side space 111 in the third direction. In the present embodiment, the interval between the first side portion 115 and the second side portion 116 and the interval between the third side portion 117 and the fourth side portion 118 are smaller than the interval between the first end portion 113 and the second end portion 114.

The inflow port 112 is formed to connect the upstream-side space 111 to an outside of the upstream-side tank portion 101. The above-described suction pipe 20 is connected to the inflow port 112. That is, the inflow port 112 is formed so as to cause the high-temperature air from the exhaust turbocharger 16 to flow into the upstream-side space 111.

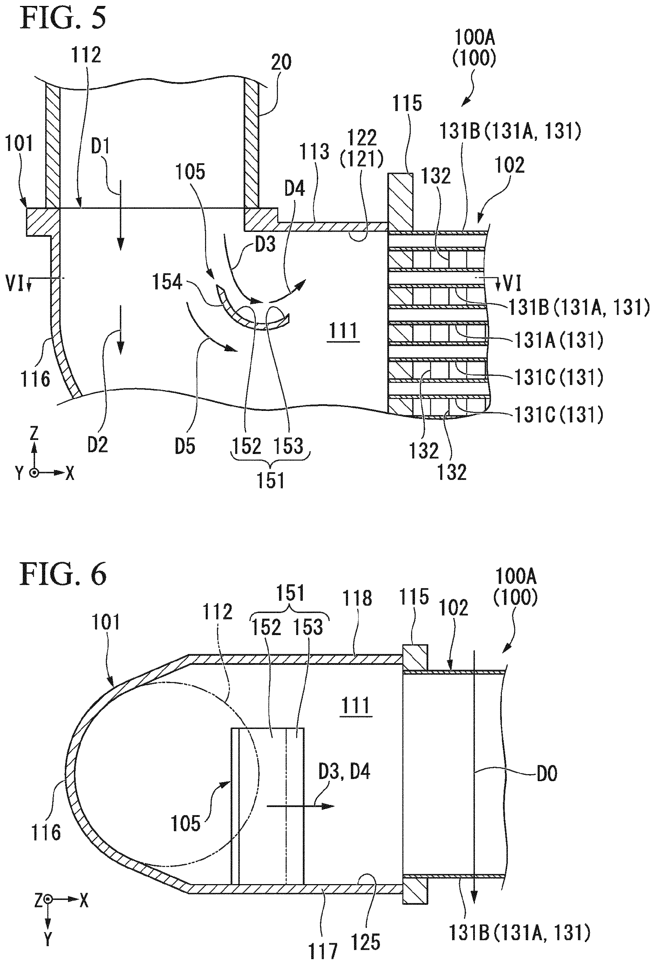

In the present embodiment, the inflow port 112 is formed on the first end portion 113 of the upstream-side tank portion 101. For example, the first end portion 113 of the upstream-side tank portion 101 may be positioned on a lower end of the upstream-side tank portion 101. However, in the present embodiment, the first end portion 113 is positioned on an upper end of the upstream-side tank portion 101. In addition, the suction pipe 20 connected to the inflow port 112 extends in the first direction from the inflow port 112. Accordingly, the high-temperature air from the exhaust turbocharger 16 flows from the outside of the upstream-side tank portion 101 toward the upstream-side space 111 mainly in the first direction. An arrow D1 shown in FIGS. 4 and 5 indicates a flow direction of the air in the flow port 112.

In the present embodiment, as shown in FIG. 5, the first end portion 113 of the upstream-side tank portion 101 includes a first inner surface 121 to which the inflow port 112 is opened. The first inner surface 121 is a portion of an inner surface of the upstream-side tank portion 101 which defines the upstream-side space 111. The first inner surface 121 is formed of a flat surface which extends in the second direction.

The first inner surface 121 includes a tube-side region 122 which is positioned between the inflow port 112 and the first side portion 115 of the upstream-side tank portion 101. For example, the first inner surface 121 may include other regions positioned between the inflow port 112 and the second side portion 116 of the upstream-side tank portion 101, in addition to the tube-side region 122. The first inner surface 121 of the present embodiment includes only the tube-side region 122.

The upstream-side tank portion 101 may be formed of any material. For example, the upstream-side tank portion 101 may be formed of a material such as aluminum having high thermal conductivity and light weight.

### <Core Portion>

As shown in FIGS. 4 to 6, the core portion 102 of the heat exchanger 100 includes a plurality of heat exchange tubes 131.

Each heat exchange tube 131 is formed in a tubular shape having both ends open. For example, the heat exchange tube 131 may be curved in an extension direction thereof. However, in the present embodiment, the heat exchange tube 131 extends in a linear shape.

A first end in the extension direction of each heat exchange tube 131 is connected to the first side portion 115 of the upstream-side tank portion 101. That is, each heat exchange tube 131 is connected to the upstream-side space 111 of the upstream-side tank portion 101. Accordingly, air which has flowed into the upstream-side space 111 can flow into each heat exchange tube 131.

The plurality of heat exchange tubes 131 are arranged in the first direction. Specifically, the first heat exchange tubes 131 are arranged at intervals in the first direction. The extension directions of the plurality of heat exchange tubes 131 are parallel to each other.

The plurality of heat exchange tubes 131 extend in the direction intersecting the first direction from the first side portion 115 of the upstream-side tank portion 101. For example, the plurality of heat exchange tubes 131 may extend so as to be inclined to the first direction side (a Z axis minus direction or a Z axis plus direction) as the heat exchange tubes 131 go in the second direction (go in an X axis plus direction) from the first side portion 115 of the upstream-side tank portion 101. In the present embodiment, the plurality of heat exchange tubes 131 extend to be parallel in the second direction.

For example, the plurality of heat exchange tubes 131 may be arranged in the third direction. However, in the present embodiment, the plurality of heat exchange tubes 131 are arranged in only the direction along the first direction.

A cross sectional shape of the heat exchange tube 131 orthogonal to the extension direction of the heat exchange tube 131 may be any shape such as a circular shape. However, in the present embodiment, the cross sectional shape is a flat tubular shape. A short direction of the heat exchange tube 131 in the cross sectional shape coincides with the first direction (the arrangement direction of the plurality of heat exchange tubes 131).

In the present embodiment, the core portion 102 further includes fins 132. Each pin 132 is provided between the heat exchange tubes 131 adjacent to each other in the first direction. Each pin 132 comes into contact with the heat exchange tubes 131. As exemplified in FIGS. 4 and 5, the pin 132 is formed to extend in the first direction between the first exchange tubes 131 adjacent to each other and a plurality of pins 132 may be arranged at intervals in the second direction (the extension direction of the heat exchange tube 131). For example, the fin 132 may be formed in a corrugated shape which extends to come into alternative contact with the heat exchange tubes 131 adjacent to each other as the pin 132 goes in the second direction.

The cooling air for cooling air which flows through the plurality of heat exchange tubes 131 hits an outside of the core portion 102 having the above-described configuration and passes through the plurality of heat exchange tubes 131. Specifically, the cooling air passes through a portion between the heat exchange tubes 131 adjacent to each other in the first direction. In the present embodiment, the cooling air flows from one side in the third direction to the other side (Y axis plus direction) (refer to FIG. 6). The arrow D0 shown in FIG. 6 indicates the flow direction of the cooling air. In the present embodiment, the cooling air is generated by the above-described cooling fan 18 (refer to FIG. 2) for the aftercooler. However, the present invention is not limited to this. For example, the cooling air may be generated by the dump truck 1 moving forward.

The core portion 102 may be formed of any material. For example, the material of the core portion 102 may be the same as that of the upstream-side tank portion 101.

### <Downstream-side Tank Portion>

As shown in FIG. 4, the downstream-side tank portion 103 includes a downstream-side space 141 and an outflow port 142.

Similarly to the upstream-side space 111 of the upstream-side tank portion 101, the downstream-side space 141 extends in the first direction. Second ends of the plurality of heat exchange tubes 131 in the extension direction are connected to the downstream-side tank portion 103. That is, the plurality of heat exchange tubes 131 are connected to the downstream-side space 141 of the downstream-side tank portion 103. Accordingly, the air flowing through the plurality of heat exchange tubes 131 can flow into the downstream-side space 141.

The outflow port 142 is formed so as to connect the downstream-side space 141 to the outside of the downstream-side tank portion 103. The above-described connection pipe 104 is connected to the outflow port 142. That is, the outflow port 142 is formed so as to discharge the air, which has flowed from the plurality of heat exchange tube 131 into the downstream-side space 141, from the downstream-side space 141. The outflow port 142 may be formed at any portion of the downstream-side tank portion 103. In the present embodiment, the outflow port 142 is formed on an end portion (a lower end of the downstream-side tank portion 103 in FIG. 4) of the downstream-side tank portion 103 positioned on a side opposite to the first end portion 113 of the upstream-side tank portion 101 when viewed in the first direction.

The downstream-side tank portion 103 may be formed of any material. For example, the material of the downstream-side tank portion 103 may be the same as that of the upstream-side tank portion 101.

### <Guide Member>

As shown in FIGS. 4 to 7, the heat exchanger 100 further includes a guide member 105. The guide member 105 is disposed in an upstream-side space 111 of the upstream-side tank portion 101. The guide member 105 includes a guide surface 151. The guide surface 151 includes a first inclined surface 152.

The first inclined surface 152 faces the inflow port 112 in the first direction. Specifically, the first inclined surface 152 faces a portion of the inflow port 112 in the first direction. The first inclined surface 152 is inclined to extend in the second direction toward the first side portion 115 of the upstream-side tank portion 101 as the first inclined surface goes away from the inflow port 112in the first direction.

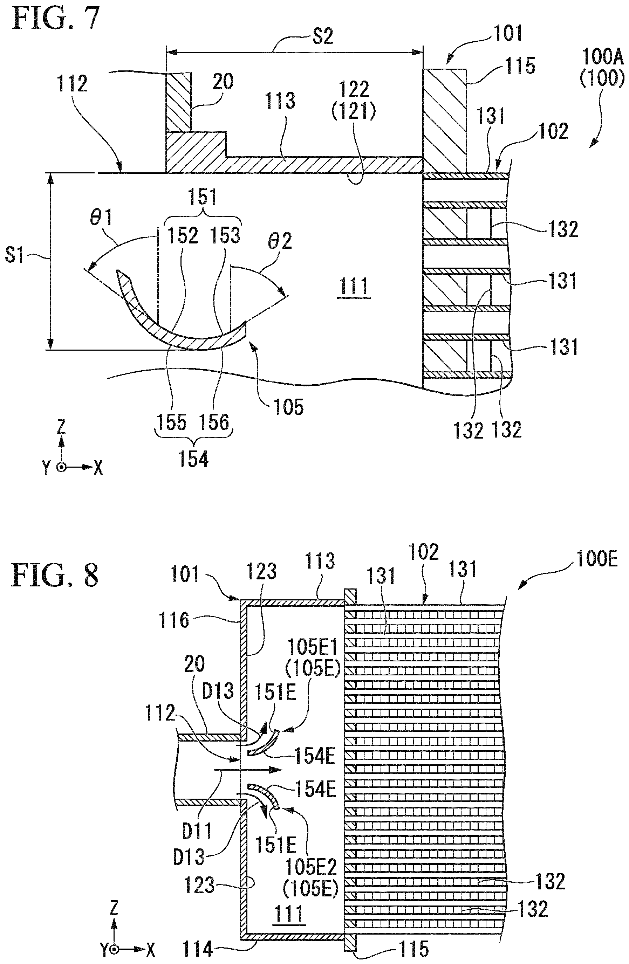

For example, the first inclined surface 152 may be formed in a flat surface in which an inclination angle of the first inclined surface 152 in the first direction is constant. As shown in FIG. 7, the first inclined surface 152 of the present embodiment is formed in a concave shape in which an inclination angle θ1 of the first inclined surface 152 in the first direction increases as the first inclined surface goes toward the first side portion 115 of the upstream-side tank portion 101 in the second direction. For example, the first inclined surface 152 may be formed by continuously arranging, in the second direction, a plurality of flat surfaces having different inclination angles θ1 in the first direction. In this case, the inclination angles θ1 of the plurality of flat surfaces constituting the first inclined surface 152 may increase in order as the flat surfaces go toward the first side portion 115 in the second direction. In the present embodiment, the first inclined surface 152 is formed in a concave curved surface in which the inclination angle θ1 continuously increases as the first inclined surface 152 approaches the first side portion 115 of the upstream-side tank portion 101.

For example, the first inclined surface 152 may face only the inflow flow 112 of the upstream-side tank portion 101 in the first direction. In the present embodiment, the first inclined surface 152 faces the tube-side region 122 of the upstream-side tank portion 101 in the first direction, in addition to the inflow port 112. A region of the first inclined surface 152 facing the tube-side region 122 is disposed at a position which is further in the first direction (a position which is further in the Z axis minus direction) from the first end portion 113 than a region of the first inclined surface 152 facing the inflow port 112.

As shown in FIGS. 5 to 7, the guide surface 151 of the guide member 105 further includes a second inclined surface 153. The second inclined surface 153 is continuously formed from a first end of the first inclined surface 152 positioned on the first side portion 115 side of the upstream-side tank portion 101. The second inclined surface 153 faces the tube-side region 122 of the upstream-side tank portion 101 in the first direction. The second inclined surface 153 is inclined so as to extend in the first direction toward the tube-side region 122 as the second inclined surface 153 goes in the second direction from the first inclined surface 152.

For example, the second inclined surface 153 may be formed in a flat surface in which an inclination angle of the second inclined surface 153 in the first direction is constant. As shown in FIG. 7, in the present embodiment, the second inclined surface 153 is formed in a concave shape in which an inclination angle θ2 of the second inclined surface 153 in the first direction decreases as the second inclined surface 153 goes toward the first side portion 115 of the upstream-side tank portion 101 in the second direction. For example, the second inclined surface 153 may be formed by continuously arranging, in the second direction, a plurality of flat surfaces having different inclination angles θ2 in the first direction. In this case, the inclination angles θ2 of the plurality of flat surfaces constituting the second inclined surface 153 may increase in order as the flat surfaces go toward the first side portion 115 in the second direction. In the present embodiment, the second inclined surface 153 is formed in a concave curved surface in which the inclination angle θ2 continuously decreases as the second inclined surface 153 approaches the first side portion 115 of the upstream-side tank portion 101.

In a boundary portion between the first inclined surface 152 and the second inclined surface 153, for example, the first inclined surface 152 and the second inclined surface 153 may be inclined to each other at a predetermined angle. In the present embodiment, in the boundary portion between the first inclined surface 152 and the second inclined surface 153, the first inclined surface 152 and the second inclined surface 153 are not inclined to each other and are smoothly continuous with each other. Specifically, the inclination angles θ1 and θ2 of both the first inclined surface 152 and the second inclined surface 153 in the boundary portion between the first inclined surface 152 and the second inclined surface 153 are 90°. That is, in the boundary portion, the first inclined surface 152 and the second inclined surface 153 are parallel in the second direction.

As shown in FIGS. 4, 5, and 7, the guide member 105 further includes a rear surface 154. The rear surface 154 is a surface facing a side opposite to the guide surface 151, that is, a surface which faces the other side with respect to the guide surface 151 facing one side in the first direction or the second direction. Specifically, the rear surface 154 is a surface facing the second end portion 114, the first side portion 115, or the second side portion 116 of the upstream-side tank portion 101.

The rear surface 154 is formed in a shape corresponding to the guide surface 151. In the present embodiment, the rear surface 154 is formed in a convex shape which bulges toward the second end portion 114 of the upstream-side tank portion 101 in the first direction.

Specifically, as shown in FIG. 7, the rear surface 154 includes a third inclined surface 155 facing a side opposite to the first inclined surface 152 of the guide surface 151. Similarly to the first inclined surface 152, the third inclined surface 155 is formed in a convex shape in which an inclination angle of the third inclined surface 155 in the first direction increases as the third inclined surface 155 goes toward the first side portion 115 of the upstream-side tank portion 101 in the second direction. For example, the third inclined surface 155 may be formed by continuously arranging, in the second direction, a plurality of flat surfaces having different inclination angles in the first direction. In this case, the inclination angles of the plurality of flat surfaces constituting the third inclined surface 155 may increase in order as the flat surfaces go toward the first side portion 115 in the second direction. In the present embodiment, the third inclined surface 155 is formed in a convex curved surface in which the inclination angle continuously increases as the third inclined surface 155 approaches the first side portion 115 of the upstream-side tank portion 101.

In addition, the rear surface 154 includes a fourth inclined surface 156 facing a side opposite to the second inclined surface 153 of the guide surface 151 in the first direction. Similarly to the second inclined surface 153, the fourth inclined surface 156 is formed in a convex shape in which an inclination angle of the fourth inclined surface 156 in the first direction decreases as the fourth inclined surface 156 goes toward the first side portion 115 of the upstream-side tank portion 101 in the second direction. For example, the fourth inclined surface 156 may be formed by continuously arranging, in the second direction, a plurality of flat surfaces having different inclination angles in the first direction. In this case, the inclination angles of the plurality of flat surfaces constituting the fourth inclined surface 156 may decrease in order as the flat surfaces go toward the first side portion 115 in the second direction. In the present embodiment, the fourth inclined surface 156 is formed in a convex curved surface in which the inclination angle continuously decreases as the fourth inclined surface 156 approaches the first side portion 115 of the upstream-side tank portion 101.

In the guide member 105 having the above-described configuration, for example, a length of the guide surface 151 from a first end of the guide member 105 to a second end thereof may be the same as a length of the rear surface 154 from the first end of the guide member 105 to the second end thereof. In the present embodiment, the length of the guide surface 151 is shorter than that of the rear surface 154. In addition, the first end of the guide member 105 is an end of the guide member 105 which is positioned away from the first side portion 115 of the upstream-side tank portion 101 in the second direction. The second end of the guide member 105 is an end of the guide member 105 which is positioned close to the first side portion 115 of the upstream-side tank portion 101 in the second direction.

For example, the guide member 105 may be configured of a portion of a cylindrical member in a circumferential direction. That is, the guide surface 151 and the rear surface 154 of the guide member 105 may be formed in a concentric arc shape when the guide member 105 is viewed in a third direction. That is, a cross section of the guide member 105 orthogonal to the third direction may be formed in a shape corresponding to a portion of a circular ring. In addition, for example, the guide member 105 may be formed in a blade shape. That is, the cross section of the guide member 105 orthogonal to the third direction may be formed in a droplet shape (a shape capable of efficiently obtaining lift by an interaction with a fluid).

The guide member 105 is positioned at an interval from the first end portion 113 of the upstream-side tank portion 101 in the first direction. In addition, the guide member 105 is positioned at the interval from the first side portion 115 of the upstream-side tank portion 101 in the second direction.

More preferably, the guide member 105 is disposed close to the first end portion 113 of the upstream-side tank portion 101 in the first direction. In the present embodiment, the guide member 105 is disposed at a position at which a first interval S1 from the first end portion 113 of the upstream-side tank portion 101 to the guide member 105 in the first direction is equal to or less than a second interval S2 from the inflow port 112 of the upstream-side tank portion 101 to the first side portion 115 of the upstream-side tank portion 101 in the second direction.

As shown in FIG. 6, the guide member 105 is fixed to an inner surface of the upstream-side tank portion 101, which defines the upstream-side space 111, in a cantilever manner. That is, the guide member 105 is fixed to one inner surface of the upstream-side tank portion 101 and extends in a direction away from the one inner surface. A tip of the guide member 105 in the extension direction and side portions of the guide member 105 in the extension direction of the guide member 105 are not fixed to other inner surfaces of the upstream-side tank portion 101. That is, the guide member 105 is connected to (constrained by) only the one inner surface of the upstream-side tank portion 101, and portions of the guide member 105 other than the portion connected to the one inner surface are not constrained.

In the present embodiment, the guide member 105 is fixed to a surface referred to as a downstream-side inner surface 125 of the upstream-side tank portion 101 defining the upstream-side space 111. As shown in FIG. 6, the downstream-side surface 125 is positioned on a downstream side in the flow direction D0 of the cooling air which flows so as to pass through the core portion 102. The guide member 105 extends to an upstream side in the flow direction D0 of the cooling air from the downstream-side inner surface 125.

In the present embodiment, the downstream-side inner surface 125 is an inner surface of the third side portion 117 of the upstream-side tank portion 101 facing the one side (upstream side in the flow direction D0) in the third direction. The guide member 105 extends in the third direction from the downstream-side inner surface 125 of the third side portion 117 toward the fourth side portion 118. However, the tip of the guide member 105 in the extension direction does not reach the fourth side portion 118 and is positioned at an interval from the fourth side portion 118.

The guide member 105 may be formed of any material. For example, a material of the guide member 105 may be the same as that of the upstream-side tank portion 101.

### <Effect>

In the heat exchanger 100 of the present embodiment, as shown in FIGS. 4 and 5, the air, which has flowed into the upstream-side space 111 of the upstream-side tank portion 101 through the inflow port 112 of the upstream-side tank portion 101, mainly flows from the one side toward the other side (in the Z axis minus direction) in the first direction in the upstream-side space 111. An arrow D2 shown in FIGS. 4 and 5 indicates a main flow direction of the air in the upstream-side space 111. Accordingly, the air does not easily flow into a heat exchange tube 131A (hereinafter, referred to as a first heat exchange tube 131A) positioned close to the inflow port 112 in the first direction and the air easily flows into other heat exchange tubes 131 positioned away from the inflow port 112 in the first direction. In addition, in the present embodiment, a second heat exchange tube 131B to be described later is included in the first heat exchange tube 131A.

Meanwhile, the guide member 105 is disposed in the upstream-side space 111 of the upstream-side tank portion 101. Particularly, the guide member 105 is disposed close to the inflow port 112 of the upstream-side tank portion 101 in the first direction. Accordingly, a portion of the air which has flowed into the upstream-side space 111 from the inflow port 112 hits the first inclined surface 152 of the guide surface 151 of the guide member 105, and thus, the flow direction of the air is changed. Accordingly, the air is guided toward the first heat exchange tube 131A positioned close to the inflow port 112. An arrow D3 shown in FIGS. 4 and 5 indicates a flow direction of the air guided by the first inclined surface 152. Accordingly, the air, which has flowed into the upstream-side space 111, easily flows into the first heat exchange tube 131A positioned close to the inflow port 112.

In addition, the air guided by the first inclined surface 152 of the guide member 105 is guided toward the second heat exchange tube 131B of the first heat exchange tube 131A positioned on the first end portion 113 side of the upstream-side tank portion 101 from the first end of the first inclined surface 152 of the guide member 105, by the second inclined surface 153 continuous with the first end of the first inclined surface 152. An arrow D4 shown in FIGS. 4 and 5 indicates a flow direction of the air guided by the second inclined surface 153. Accordingly, the air easily flows into the second heat exchange tube 131B.

In addition, when the air which has flowed into the upstream-side space 111 of the upstream-side tank portion 101 flows in the flow direction D2 in the upstream-side space 111, a static pressure on the rear surface 154 of the guide member 105 is smaller than a static pressure of the air in a region of the upstream-side space 111 positioned farther from the first side portion 115 of the upstream-side tank portion 101 than the guide member 105. Accordingly, a portion of the air which has flowed into the upstream-side space 111 flows along the rear surface 154 of the guide member 105. The air flowing along the rear surface 154 is guided to flow toward a third heat exchange tube 131C adjacent to the second end portion 114 side of the upstream-side tank portion 101 with respect to the first heat exchange tube 131A. An arrow D5 shown in FIG. 5 indicates the flow direction of the air flowing along the rear surface 154 of the guide member 105. Accordingly, the air, which has flowed into the upstream-side space 111, also easily flows into the third heat exchange tube 131C positioned between the first heat exchange tube 131A and other heat exchange tubes 131 positioned away from the inflow port 112.

In addition, in the heat exchanger 100 of the present embodiment, the guide member 105 is fixed to the downstream-side inner surface 125 of the third side portion 117 of the upstream-side tank portion 101 positioned on the downstream side in the flow direction D0 of the cooling air, in a cantilever manner. In addition, the guide member 105 is positioned at an interval from the fourth side portion 118 of the upstream-side tank portion 101 positioned on the upstream side in the flow direction D0 of the cooling air. Accordingly, the guide member 105 guides the high-temperature air, which has flowed from the inflow port 112 into the upstream-side space 111, toward the first and third heat exchange tubes 131A and 131C on the downstream side in the flow direction D0 of the cooling air. Meanwhile, the guide member 105 does not guide the high-temperature air toward the first and third heat exchange tubes 131A and 131C on the upstream side in the flow direction D0 of the cooling air.

As described above, according to the heat exchanger 100 according to the present embodiment, the guide member. 105 including the first inclined surface 152 is disposed in the upstream-side space 111 of the upstream-side tank portion 101. Accordingly, the high-temperature air, which has flowed into the upstream-side space 111, easily flows into both the first heat exchange tube 131A positioned close to the inflow port 112 and other heat exchange tubes 131 positioned away from the inflow port 112. That is, it is possible to suppress the inflow of the high-temperature air to only some of the heat exchange tubes 131. As a result, it is possible to suppress occurrence of temperature variation between the plurality of heat exchange tubes 131, and it is possible to decrease stress generated in the heat exchanger 100. Accordingly, it is possible to improve durability of the heat exchanger 100.

In addition, because the durability of the heat exchanger 100 is improved, it is possible to prevent a decrease in fuel consumption of the engine 11. For example, in a case where the durability of the heat exchanger 100 decreases, the heat exchanger 100 is damaged, and air leaks from the heat exchanger 100, an amount of the air supplied from the heat exchanger 100 to the engine 11 decreases, and output of the engine 11 decreases from a predetermined value. However, an engine controller which controls an operation of the engine injects more fuel such that the output of the engine 11 is returned to the predetermined value. Accordingly, the fuel of the engine 11 decreases.

Meanwhile, if the durability of the heat exchanger 100 is improved, it is possible to prevent the air from leaking from the heat exchanger 100, and thus, it is possible to prevent the decrease in the fuel consumption of the engine 11.

In addition, according to the heat exchanger 100 of the present embodiment, it is possible to decrease a size and weight of the heat exchanger 100. Hereinafter, this will be described in detail.

In the heat exchanger 100, if there is the heat exchange tube 131 into which the high-temperature air does not easily flow, the heat exchange tube 131 has a low contribution ratio with respect to the cooling of the air. That is, in the heat exchanger 100 including the heat exchange tube 131 into which the high-temperature air does not easily flow, cooling efficiency of the air is low. Accordingly, the heat exchanger 100 including the heat exchange tube 131 into which the high-temperature air does not easily flow becomes unnecessarily large and heavy. Meanwhile, in the heat exchanger 100 of the present embodiment, the guide member 105 is provided, and thus, the high-temperature air can evenly flow into all the heat exchange tubes 131. That is, it is possible to eliminate the heat exchange tube 131 having a low contribution ratio with respect to the cooling of the air, and thus, it is possible to increase cooling efficiency of the heat exchanger 100, and it is possible to decrease the size and weight of the heat exchanger 100.

In addition, according to the heat exchanger 100 of the present embodiment, the first inclined surface 152 of the guide member 105 is disposed to face the inflow port 112 and the tube-side region 122 in the first direction. Accordingly, the high-temperature air, which has flowed into the upstream-side space 111 through the inflow port 112, can be effectively guided toward the first heat exchange tube 131A, which is positioned close to the inflow port 112, by the first inclined surface 152.

Moreover, according to the heat exchanger 100 of the present embodiment, the second inclined surface 153 is continuously formed from the first end of the first inclined surface 152 positioned on the first side portion 115 side. Accordingly, the high-temperature air guided by the first inclined surface 152 of the guide member 105 can be guided toward the second heat exchange tube 131B positioned on the first end portion 113 side of the upstream-side tank portion 101 from the first end of the first inclined surface 152, by the second inclined surface 153.

In addition, according to the heat exchanger 100 of the present embodiment, the first inclined surface 152 is formed in a concave shape in which the inclination angle in the first direction increases as the first inclined surface 152 goes toward the first side portion 115 in the second direction. In addition, the second inclined surface 153 is formed in a concave shape in which the inclination angle in the first direction decreases as the second inclined surface 153 goes toward the first side portion 115 in the second direction. Accordingly, the high-temperature air, which has flowed into the upstream-side space 111, can be smoothly guided toward the first heat exchange tube 131A by the first inclined surface 152 or the second inclined surface 153. That is, the high-temperature air can be effectively guided toward the first heat exchange tube 131A.

In addition, according to the heat exchanger 100 of the present embodiment, the guide member 105 includes the rear surface 154 which faces the side opposite to at least the guide surface 151. In addition, the rear surface 154 is formed in a shape corresponding to the guide surface 151. Accordingly, the high-temperature air, which has flowed into the upstream-side space 111, can be guided toward the third heat exchange tube 131C, which is positioned between the first heat exchange tube 131A and other heat exchange tubes 131 positioned away from the inflow port 112, by the rear surface 154. That is, it is possible to further suppress the inflow of the high-temperature air to only some of the heat exchange tubes 131.

In addition, according to the heat exchanger 100 of the present embodiment, the guide member 105 is fixed to the inner surface of the upstream-side tank portion 101 in a cantilever manner. The guide member 105 is fixed to only one inner surface of the upstream-side tank portion 101. That is, in the guide member 105, portions other than the portion fixed to the one inner surface of the upstream-side tank portion 101 are not constrained, and thus, the guide member 105 can expand and contract based on heat of the high-temperature air flowing into the upstream-side space 111, and it is possible to prevent stress from being generated in the guide member 105. Accordingly, it is possible to improve the durability of the guide member 105 with respect to the heat of the high-temperature air.

In addition, according to the heat exchanger 100 of the present embodiment, the guide member 105 is fixed to the downstream-side inner surface 125 of the third side portion 117 of the upstream-side tank portion 101, which is positioned on the downstream side in the flow direction D0 of the cooling air, in a cantilever manner. Accordingly, it is possible to simultaneously achieve improvement of the durability of the guide member 105 and improvement of the durability of the heat exchanger 100 with respect to the high-temperature air. Here, this will be described in detail.

In the heat exchanger 100, the cooling air is warmed by the heat exchange tube 131 through which the high-temperature air flows as the cooling air flows from the upstream side to the downstream side in the flow direction D0. Accordingly, a temperature difference between the heat exchange tubes 131 (the first heat exchange tube 131A and the third heat exchange tube 131C) which are positioned close to the inflow port 112 and into which the high-temperature air does not easily flow and other heat exchange tubes 131 which are positioned away from the inflow port 112 and into which the high-temperature air easily flows increases from the downstream side in the flow direction D0 of the cooling air.

Meanwhile, in the heat exchanger 100 of the present embodiment, the guide member 105 is fixed to the downstream-side inner surface 125 of the upstream-side tank portion 101 in a cantilever manner. Accordingly, the guide member 105 guides the high-temperature air toward the first and third heat exchange tubes 131A and 131C on the downstream side in the flow direction D0 in the cooling air. Accordingly, the temperature difference between the first and third heat exchange tubes 131A and 131C positioned on the downstream side in the flow direction D0 of the cooling air and other heat exchange tubes 131 decreases, a thermal expansion difference in the heat exchanger 100 is suppressed, and it is possible to improve the durability of the heat exchanger 100. Accordingly, it is possible to simultaneously achieve the improvement of the durability of the guide member 105 and the improvement of the durability of the heat exchanger 100 with respect to the high-temperature air.

The temperature of the cooling air on the upstream side in the flow direction D0 of the cooling air is lower than that on the downstream side in the flow direction D0 thereof. Accordingly, the temperature difference between the first and third heat exchange tubes 131A and 131C on the upstream side in the flow direction D0 of the cooling air and the other heat exchange tubes 131 is smaller than that on the downstream side due to the cooling effect of the cooling air. Accordingly, the guide member 105 may not guide the high-temperature air toward the first and third heat exchange tubes 131A and 131C on the upstream side in the flow direction D0 of the cooling air.

In addition, according to the heat exchanger 100 of the present embodiment, the first interval S1 from the first end portion 113 of the upstream-side tank portion 101 to the guide member 105 in the first direction is equal to or less than the second interval S2 from the inflow port 112 of the upstream-side tank portion 101 to the first end portion 113 of the upstream-side tank portion 101 in the second direction. Accordingly, it is possible to reliably dispose the guide member 105 close to the first end portion 113 of the upstream-side tank portion 101 in the first direction; Therefore, the guide member 105 can reliably guide the high-temperature air, which has flowed into the upstream-side space 111, toward the heat exchange tube 131 positioned close to the inflow port 112.

### <Other Embodiments Not Encompassed by the Present Invention>

The other embodiments may be applied to heat exchangers 100E, 100F, and 100G exemplified in FIGS. 8 to 10. The heat exchangers 100E, 100F, and 100G shown in FIGS. 8 to 10 include the upstream-side tank portion 101, the core portion 102, and a guide member 105E similar to those of the above-described embodiment. The configuration of the core portion 102 is similar to that of the heat exchanger 100 of the above-described embodiment.

The upstream-side space 111 of the upstream-side tank portion 101 is similar to that of the above-described embodiment. However, the inflow port 112 of the upstream-side tank portion 101 is formed on the second side portion 116 of the upstream-side tank portion 101 in the second direction (X axis direction). The second side portion 116 is a portion facing the first side portion 115 to which the plurality of heat exchange tubes 131 are connected. The suction pipe 20 extending in the second direction is connected to the inflow port 112 of the upstream-side tank portion 101. Accordingly, the inflow port 112 of the upstream-side tank portion 101 causes the air to flow in mainly the second direction from the outside toward the upstream-side space 111. An arrow D11 shown in FIGS. 8 to 10 indicates the flow direction of the air in the inflow port 112.

The second side portion 116 includes a second inner surface 123 to which the inflow port 112 is opened. The second inner surface 123 is a portion of the inner surface of the upstream-side tank portion 101 defining the upstream-side space 111. The second inner surface 123 is formed on a flat surface extending in the first direction (Z axis direction).

Similarly to the above-described embodiment, the guide member 105E is disposed in the upstream-side space 111 and includes a guide surface 151E. The guide surface 151E faces the inflow port 112 in the second direction. Specifically, the guide surface 151E faces a portion of the inflow port 112 in the second direction. The guide surface 151E is inclined to extend in the first direction toward the end portion (first end portion 113 or the second end portion 114) in the first direction of the upstream-side tank portion 101 as the guide surface 151E goes away from the inflow port 112 in the second direction.

For example, the guide surface 151E may be formed on a flat surface in which an inclination angle of the guide surface 151E in the second direction is constant. The guide surface 151E exemplified in FIGS. 8 to 10 is formed in a concave shape in which the inclination angle of the guide surface 151E in the second direction increases as the guide surface 151E goes toward the end portion (first end portion 113 or the second end portion 114) of the upstream-side tank portion 101 in any one of the plus direction and the minus direction in the first direction. In FIGS. 8 to 10, similarly to the first embodiment, the guide surface 151E is formed in a concave curved surface.

For example, the guide surface 151E may face the inflow port 112 of the upstream-side tank portion 101 in only the second direction. In the configuration exemplified in FIGS. 8 to 10, the guide surface 151E faces the second inner surface 123 of the upstream-side tank portion 101 in addition to the inflow port 112 in the second direction. A region of the guide surface 151E facing the second inner surface 123 is positioned farther from the second side portion 116 than a region of the guide surface 151E facing the inflow port 112 in the second direction.

The guide member 105E further includes a rear surface 154E similar to that of the above-described embodiment. The rear surface 154E is a surface of the guide surface 151E facing the other side in the second direction. Specifically, the rear surface 154E is a surface facing the first side portion 115 of the upstream-side tank portion 101 in the second direction. The rear surface 154E is formed in a shape corresponding to the guide surface 151E.

Similarly to the above-described embodiment, the guide member 105E exemplified in FIGS. 8 to 10 may be fixed to the inner surface (for example, the downstream-side inner surface positioned on the downstream side in the flow direction D0 of the cooling air) of the upstream-side tank portion 101 in a cantilever manner.

In the heat exchanger 100E exemplified in FIG. 8, the inflow port 112 is formed in a middle portion of the second side portion 116 in the first direction. That is, the second inner surfaces 123 to which the inflow port 112 is opened are formed on both sides of the inflow port 112 in the first direction.

Accordingly, two guide members 105E (105E1 and 105E2) may be provided in the upstream-side space 111. The guide surface 151E of the first guide member 105E1 may be inclined to extend in the plus direction in the first direction toward the first end portion 113 of the upstream-side tank portion 101 as the guide surface 151E goes away from the inflow port 112 in the second direction. Meanwhile, the guide surface 151E of the second guide member 105E2 may be inclined to extend in the minus direction in the first direction toward the second end portion 114 of the upstream-side tank portion 101 as the guide surface 151E goes away from the inflow port 112 in the second direction.

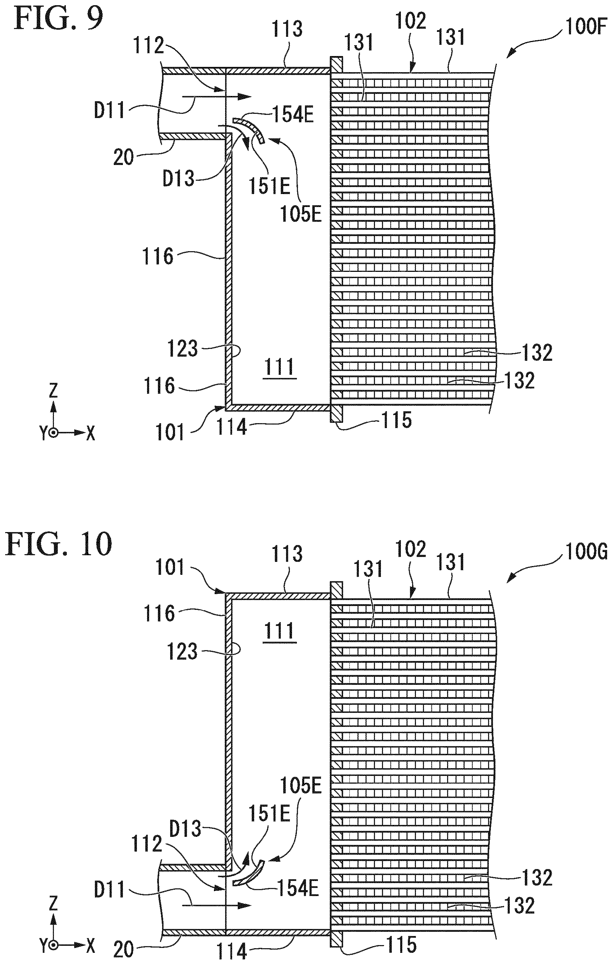

In the heat exchanger 100F exemplified in FIG. 9, the inflow port 112 is formed on an end of the second side portion 116 on the first end portion 113 side. That is, the second inner surface 123 to which the inflow port 112 is opened is formed in only one side (second end portion 114 side) of the inflow port 112 in the first direction. Meanwhile, in the heat exchanger 100G exemplified in FIG. 10, the inflow port 112 is formed on an end of the second side portion 116 on the second end portion 114 side. That is, the second inner surface 123 to which the inflow port 112 is opened is formed on only the other side (first end portion 113 side) of the inflow port 112 in the first direction.

Accordingly, one guide member 105E may be provided in the upstream-side space 111 of the upstream-side tank portion 101 exemplified in FIGS. 9 and 10. Specifically, in the configuration of FIG. 9, the guide surface 151E of the second guide member 105E may be inclined to extend in the minus direction in the first direction toward the second end portion 114 of the upstream-side tank portion 101 as the guide surface 151E goes away from the inflow port 112 in the second direction. Meanwhile, in the configuration of FIG. 10, the guide surface 151E of the second guide member 105E may be inclined to extend in the plus direction in the first direction toward the first end portion 113 of the upstream-side tank portion 101 as the guide surface 151E goes away from the inflow port 112 in the second direction. That is, each of the heat exchangers 100E, 100F, and 100G includes the guide member 105E having the guide surface 151E which is inclined to extend in the first direction toward the end portion (the first end portion 113 or the second end portion 114) of the upstream-side tank portion 101 in the first direction as the guide surface 151E goes in the second direction from the inflow port 112.

In the heat exchangers 100E, 100F, and 100G exemplified in FIGS. 8 to 10, the air, which has flowed into the upstream-side space 111 of the upstream-side tank portion 101 through the inflow port 112 of the upstream-side tank portion 101, mainly flows from one side toward the other side (the X axis plus direction) in the second direction in the upstream-side space 111. Accordingly, the air does not easily flow into the heat exchange tube 131 positioned away from the inflow port 112 in the plus direction or the minus direction in the first direction, and the air easily flows into the heat exchange tube 131 positioned close to the inflow port 112 in the first direction.

Meanwhile, the above-described guide member 105E is disposed in the upstream-side space 111 of the upstream-side tank portion 101. Accordingly, a portion of the air, which has flowed from the inflow port 112 into the upstream-side space 111, is guided to the upstream-side tank portion 101 in the plus direction or the minus direction in the first direction by the guide surface 151E of the guide member 105E. An arrow D13 shown in FIGS. 8 to 10 indicates a flow direction of the air guided by the guide surface 151E. Accordingly, the air which has flowed into the upstream-side space 111 also easily flows into the heat exchange tube 131 positioned away from the inflow port 112. Accordingly, it is possible to suppress the inflow of the air to only some of the heat exchange tubes 131. As a result, it is possible to suppress occurrence of temperature variation between the plurality of heat exchange tubes 131, it is possible to suppress the thermal expansion difference in each of the heat exchangers 100E, 100F, and 100G, and it is possible to decrease stress generated in each of the heat exchangers 100E, 100F, and 100G. Accordingly, it is possible to improve durability of each of the heat exchangers 100E, 100F, and 100G. That is, according to each of the heat exchangers 100E, 100F, and 100G exemplified in FIGS. 8 to 10, effects similar to those of the above-described embodiment are exhibited.

In addition, similarly to the case of the above-described embodiment, according to the heat exchangers 100E, 100F, and 100G exemplified in FIGS. 8 to 10, the air, which has flowed into the upstream-side space 111, can be guided to the upstream-side tank portion 101 in the plus direction or the minus direction in the first direction by the rear surface 154E. Accordingly, it is possible to further suppress the inflow of the air, which has flowed into the upstream-side space 111, to only some of the heat exchange tubes 131.

In the heat exchanger of the present invention, for example, each of the guide members 105 may be arranged at an interval from the inflow port 112 in the plus direction or the minus direction in the first direction. In this case, the air which has flowed into the upstream-side space 111 can be guided toward the plurality of heat exchange tubes 131, which are arranged in the first direction, by the plurality of guide members 105. Accordingly, it is possible to further suppress the inflow of the air to only some of the heat exchange tubes 131.

For example, the heat exchanger of the present invention may be applied to the radiator 12 which is used to cool the engine 11. That is, the heat exchanger of the present invention is not limited to the cooling of the air and may be used to cool a fluid such as cooling water.

The heat exchanger of the present invention is not limited to the articulated dump truck. For example, the present invention may be applied to any work vehicle such as a rigid type dump truck, a hydraulic excavator, a bulldozer, or an engine type forklift.

### Reference Signs List

- 100, 100A, 100B, 100E, 100F, 100G:: heat exchanger
- 101:: upstream-side tank portion
- 102:: core portion
- 103:: downstream-side tank portion
- 105, 105E, 105E1, 105E2:: guide member
- 111:: upstream-side space
- 112:: inflow port
- 113:: first end portion
- 114:: second end portion
- 115:: first side portion
- 116:: second side portion
- 117:: third side portion
- 118:: fourth side portion
- 121:: first inner surface
- 122:: tube-side region
- 123:: second inner surface
- 131, 131A, 131B, 131C:: heat exchange tube
- 132:: fin
- 151, 151E:: guide surface
- 152:: first inclined surface
- 153:: second inclined surface
- 154, 154E:: rear surface
- S1:: first interval
- S2:: second interval
- θ1:: inclination angle of first inclined surface 152
- θ2:: inclination angle of second inclined surface 153

## Claims

1. A heat exchanger (100, 100A), comprising:
an upstream-side tank portion (101) which includes an upstream-side space (111) extending in a first direction and an inflow port (112), the inflow port (112) being formed on a first end portion (113) of the upstream-side tank portion (101) in the first direction and a cooling target fluid flowing from an outside toward the upstream-side space (111) through the inflow port (112) in the first direction;
a core portion (102) which includes a plurality of heat exchange tubes (131) which are connected to a first side portion (115) of the upstream-side tank portion (101) in a second direction orthogonal to the first direction and are arranged in the first direction,
the fluid flowing from the upstream-side space (111) into the plurality of heat exchange tubes (131); and
a guide member (105) which is disposed in the upstream-side space (111), the guide member (105) including a guide surface (151) which faces the inflow port (112) in the first direction and includes a first inclined surface (152) inclined to extend in the second direction toward the first side portion (115) as the first inclined surface (152) goes away from the inflow port (112) in the first direction,
wherein the first end portion (113) includes a first inner surface (121) which is formed to extend in the second direction and to which the inflow port (112) is opened, and
wherein the first inner surface (121) includes a tube-side region (122) which is positioned between the inflow port (112) and the first side portion (115),
**characterized in that**
the guide surface (151) includes a second inclined surface (153) which is continuously formed from a first end of the first inclined surface (152) positioned on the first side portion side and faces the tube-side region (122) in the first direction, the second inclined surface (153) being inclined to extend in the first direction toward the tube-side region (122) as the second inclined surface (153) goes in the second direction from the first inclined surface (152), and
the second inclined surface (153) is formed in a concave shape in which an inclination angle (θ2) between second inclined surface (153) and the first direction decreases as the second inclined surface (153) goes toward the first side portion (115) in the second direction.

2. The heat exchanger (100, 100A) according to Claim 1,
wherein the first inclined surface (152) faces the tube-side region (122) in the first direction.

3. The heat exchanger (100, 100A) according to Claim 1 or 2,
wherein the first inclined surface (152) is formed in a concave shape in which an inclination angle (θ1) between the first inclined surface (152) and the first direction increases as the first inclined surface (152) goes toward the first side portion (115) in the second direction.

4. The heat exchanger (100, 100A) according to any one of Claims 1 to 3,
wherein the guide member (105) includes a rear surface (154) which faces the other side of the guide surface (151) in the first direction and is formed in a shape corresponding to the guide surface (151).

5. The heat exchanger (100, 100A) according to any one of Claims 1 to 4,
wherein the guide member (105) is fixed to an inner surface (125) of the upstream-side tank portion (101) in a cantilever manner.

6. The heat exchanger (100, 100A) according to Claim 5,
wherein the guide member (105) is fixed to a downstream-side inner surface (125) of the upstream-side tank portion (101) positioned on a downstream side in a flow direction (D0) of cooling air which flows to pass through the core portion (102) and cools the fluid flowing through the heat exchange tube (131), and the guide member (105) extends from the downstream-side inner surface (125) to an upstream side in the flow direction (D0) of the cooling air.

7. The heat exchanger (100, 100A) according to any one of Claims 1 to 6,
wherein a first interval (S1) from the first end portion (113) to the guide member (105) in the first direction is equal to or less than a second interval (S2) from the inflow port (112) to the first side portion (115) in the second direction.

## Patentansprüche

1. Wärmetauscher (100, 100A), umfassend:
einen Tankabschnitt (101) an der stromauf liegenden Seite, der einen sich in einer ersten Richtung erstreckenden Raum (111) an der stromauf liegenden Seite und eine Einström-Öffnung (112) enthält, wobei die Einström-Öffnung (112) an einem ersten Endabschnitt (113) des Tankabschnitts (101) an der stromauf liegenden Seite in der ersten Richtung ausgebildet ist und ein Kühlobjekt-Fluid von einer Außenseite in der ersten Richtung über die Einström-Öffnung (112) zu dem Raum (111) an der stromauf liegenden Seite strömt;
einen Kernabschnitt (102), der eine Vielzahl von Wärmetauscherrohren (131) enthält, die mit einem ersten Seitenabschnitt (115) des Tankabschnitts (101) an der stromauf liegenden Seite in einer zweiten Richtung im rechten Winkel zu der ersten Richtung verbunden und in der ersten Richtung angeordnet sind, wobei das Fluid aus dem Raum (111) an der stromauf liegenden Seite in die Vielzahl von Wärmetauscherrohren (131) strömt; sowie ein Führungselement (105), das in dem Raum (111) an der stromauf liegenden Seite angeordnet ist, wobei das Führungselement (105) eine Führungsfläche (151) aufweist, die der Einström-Öffnung (112) in der ersten Richtung zugewandt ist und eine erste geneigte Fläche (152) einschließt, die so geneigt ist, dass sie sich mit Entfernung der ersten geneigten Fläche (152) in der ersten Richtung von der Einström-Öffnung (112) weg in der zweiten Richtung zu dem ersten Seitenabschnitt (115) hin erstreckt,
wobei der erste Endabschnitt (113) eine erste Innenfläche (121) enthält, die so ausgebildet ist, dass sie sich in der zweiten Richtung erstreckt und zu der die Einström-Öffnung (112) geöffnet ist, und
wobei die erste Innenfläche (121) einen Bereich (122) an der Rohr-Seite aufweist, der zwischen der Einström-Öffnung (112) und dem ersten Seitenabschnitt (115) positioniert ist,
**dadurch gekennzeichnet, dass**
die Führungsfläche (151) eine zweite geneigte Fläche (153) einschließt, die durchgehend von einem ersten Ende der ersten geneigten Fläche (152) ausgebildet ist, die an der Seite des ersten Seitenabschnitts positioniert ist, und dem Bereich (122) an der Rohr-Seite in der ersten Richtung zugewandt ist, wobei die zweite geneigte Fläche (153) so geneigt ist, dass sie sich mit Entfernung der zweiten geneigten Fläche (153) in der zweiten Richtung von der ersten geneigten Fläche (152) weg in der ersten Richtung zu dem Bereich (122) an der Rohr-Seite hin erstreckt, und
die zweite geneigte Fläche (153) in einer konkaven Form ausgebildet ist, in der ein Neigungswinkel (θ2) zwischen der zweiten geneigten Fläche (153) und der ersten Richtung mit Annäherung der zweiten geneigten Fläche (153) an den ersten Seiten-Abschnitt (115) in der zweiten Richtung abnimmt.

2. Wärmetauscher (100, 100A) nach Anspruch 1,
wobei die erste geneigte Fläche (152) dem Bereich (122) an der Rohr-Seite in der ersten Richtung zugewandt ist.

3. Wärmetauscher (100, 100A) nach Anspruch 1 oder 2,
die erste geneigte Fläche (152) in einer konkaven Form ausgebildet ist, in der ein Neigungswinkel (θ1) zwischen der ersten geneigten Fläche (152) und der ersten Richtung mit Annäherung der ersten geneigten Fläche (152) an den ersten Seiten-Abschnitt (115) in der zweiten Richtung zunimmt.

4. Wärmetauscher (100, 100A) nach einem der Ansprüche 1 bis 3,
wobei das Führungselement (105) eine hintere Fläche (154) enthält, die der anderen Seite der Führungsfläche (151) in der ersten Richtung zugewandt ist und in einer der Führungsfläche (151) entsprechenden Form ausgebildet ist.

5. Wärmetauscher (100, 100A) nach einem der Ansprüche 1 bis 4,
wobei das Führungselement (105) an einer Innenfläche (125) des Tankabschnitts (101) an der stromauf liegenden Seite auslegerartig befestigt ist.

6. Wärmetauscher (100, 100A) nach Anspruch 5,
wobei das Führungselement (105) an einer Innenfläche (125) an der stromab liegenden Seite des Tankabschnitts (101) an der stromauf liegenden Seite befestigt ist, die an einer stromab liegenden Seite in einer Strömungsrichtung (D0) von Kühlluft positioniert ist, die den Kernabschnitt (102) durchströmt und das durch das Wärmetauscherrohr (131) strömende Fluid kühlt, und das Führungselement (105) sich von der Innenfläche (125) an der stromab liegenden Seite zu einer stromauf liegenden Seite in der Strömungsrichtung (D0) der Kühlluft erstreckt.

7. Wärmetauscher (100, 100A) nach einem der Ansprüche 1 bis 6,
wobei ein erster Abstand (S1) von dem ersten Endabschnitt (113) zu dem Führungselement (105) in der ersten Richtung genauso groß ist wie oder kleiner als ein zweiter Abstand (S2) von der Einström-Öffnung (112) zu dem ersten Seitenabschnitt (115) in der zweiten Richtung.

## Revendications

1. Échangeur thermique (100, 100A) comprenant :
un réservoir du côté amont (101) qui inclut un espace du côté amont (111) s'étendant dans une première direction et un orifice d'entrée de flux (112), l'orifice d'entrée (112) étant formé sur une première extrémité (113) du réservoir du côté amont (101) dans la première direction, et un fluide cible de refroidissement circule depuis l'extérieur vers l'espace du côté amont (111) au travers de l'orifice d'entrée (112) dans la première direction,
une partie centrale (102) qui inclut une pluralité de tubes d'échange thermique (131) qui sont reliés à un premier côté (115) du réservoir du côté amont (101) dans une seconde direction orthogonale à la première direction et qui sont agencés dans la première direction, le fluide circulant depuis l'espace du côté amont (111) dans la pluralité de tubes d'échange thermique (131), et
un élément de guidage (105) qui est disposé dans l'espace du côté amont (111), l'élément de guidage (105) incluant une surface de guidage (151) qui fait face à l'orifice d'entrée (112) dans la première direction et qui inclut une première surface inclinée (152) penchant pour s'étendre dans la seconde direction vers le premier côté (115) à mesure que la première surface inclinée (152) s'éloigne de l'orifice d'entrée (112) dans la première direction,
dans lequel la première extrémité (113) inclut une première surface interne (121) qui est formée pour s'étendre dans la seconde direction et sur laquelle est ouvert l'orifice d'entrée (112), et
dans lequel la première surface interne (121) inclut une zone du côté des tubes (122) qui est positionnée entre l'orifice d'entrée (112) et le premier côté (115),
**caractérisé en ce que** :
la surface de guidage (151) inclut une seconde surface inclinée (153) qui est formée continûment depuis une première extrémité de la première surface inclinée (152) positionnée sur le premier côté et fait face à la zone du côté des tubes (122) dans la première direction, la seconde surface inclinée (153) penchant pour s'étendre dans la première direction vers la zone du côté des tubes (122) à mesure que la seconde surface inclinée (153) avance dans la seconde direction à partir de la première surface inclinée (152), et
la seconde surface inclinée (153) prend une forme concave dans laquelle l'angle d'inclinaison (θ2) entre la seconde surface inclinée (153) et la première direction diminue à mesure que la seconde surface inclinée (153) se rapproche du premier côté (115) dans la seconde direction.

2. Échangeur de chaleur (100, 100A) selon la revendication 1,
dans lequel la première surface inclinée (152) fait face à la zone du côté des tubes (122) dans la première direction.

3. Échangeur de chaleur (100, 100A) selon la revendication 1 ou la revendication 2,
dans laquelle la première surface inclinée (152) prend une forme concave dans laquelle l'angle d'inclinaison (θ1) entre la première surface inclinée (152) et la première direction augmente à mesure que la première surface inclinée (152) se rapproche du premier côté (115) dans la seconde direction.

4. Échangeur de chaleur (100, 100A) selon l'une quelconque des revendications 1 à 3,
dans lequel l'élément de guidage (105) inclut une surface arrière (154) qui fait face à l'autre côté de la surface de guidage (151) dans la première direction et qui prend une forme correspondant à la surface de guidage (151).

5. Échangeur de chaleur (100, 100A) selon l'une quelconque des revendications 1 à 4,
dans lequel l'élément de guidage (105) est fixé en porte-à-faux sur la surface interne (125) du réservoir du côté amont (101).

6. Échangeur de chaleur (100, 100A) selon la revendication 5,
dans lequel l'élément de guidage (105) est fixé sur la surface interne du côté aval (125) du réservoir du côté amont (101) positionné sur le côté aval dans la direction d'écoulement (D0) de l'air de refroidissement qui circule pour traverser la partie centrale (102) et qui refroidit le fluide circulant au travers du tube d'échange thermique (131), et l'élément de guidage (105) s'étend depuis la surface interne du côté aval (125) vers le côté amont dans la direction d'écoulement (D0) de l'air de refroidissement.

7. Échangeur de chaleur (100, 100A) selon l'une quelconque des revendications 1 à 6,
dans lequel un premier intervalle (S1) allant de la première extrémité (113) jusqu'à l'élément de guidage (105) dans la première direction est inférieur ou égal à un second intervalle (S2) allant de l'orifice d'entrée (112) jusqu'au premier côté (115) dans la seconde direction.
